# EUROPEAN PATENT SPECIFICATION

(11) **EP 2 137 790 B1**
(45) Date of publication and mention of the grant of the patent: **23.05.2012**
(21) Application number: 08732719.3
(22) Date of filing: 21.03.2008
(51) Int. Cl.: H01Q 1/22

(54) **MODEM CARD WITH CORNER MADE ANTENNA ARRANGEMENT**
MODEMKARTE MIT ANTENNENANORDNUNG AUS EINER ECKE
CARTE MODEM AVEC MONTAGE D'ANTENNE RÉALISÉ EN COIN

(30) Priority: 22.03.2007 US 690085
(43) Date of publication of application: 30.12.2009
(73) Proprietor: Kyocera Corporation, Kyoto 612-8501 (JP)
(72) Inventor: ZUECK, Joseph, San Diego, CA 92121 (US); FABREGA-SANCHEZ, Jorge, San Diego, CA 92121 (US); MATSUO, Kotaro, San Diego, CA 92121 (US); SHIFRON, Sam, San Diego, CA 92121 (US)
(74) Representative: Viering, Jentschura & Partner
(86) International application number: PCT/US2008/057942
(87) International publication number: WO 2008/116200

(56) References cited:
- EP-B- 0 712 212
- WO-A-2006/098067
- US-A1- 2004 140 938

## Description

### FIELD OF THE INVENTION

The present invention relates to computer peripheral devices and more particularly to modem cards.

### BACKGROUND

Modem cards allow a computer to wirelessly communicate with a communications system. These cards employ a primary antenna to transmit signals to the communications system and/or receive signals from the communications system. The limited size of these cards along with design standards can negatively impact the ability to optimize the performance of the primary antennas. Additionally, modem cards that employ one or more secondary antennas have emerged. Examples of secondary antennas include, but are not limited to, diversity antennas, global positioning system (GPS) antennas, Bluetooth® antennas, and WI-FI® antennas. The presence of these secondary antennas on a modem card can compounded the difficulties associated with optimizing performance of the primary antenna in the modem card. As a result, there is a need for modem cards having improved primary antenna arrangements.

Prior art document EP0712212 describes a conformal antenna for wireless local area network transceivers.

### SUMMARY

A modem card is configured to be dettachably connected to a computer and provides communication between the computer and a communications system. The modem card includes a case holding electronics. A corner extends along a side of the case. An antenna body is connected to the case such that the antenna body bends around the corner of the case. An antenna is in electrical communication with the electronics in the case. The antenna is positioned in the antenna body such that the antenna bends around the corner of the case.

### BRIEF DESCRIPTION OF THE DRAWINGS

Figure 1 illustrates a computer system configured to transmit wireless signals to a communications system. The computer system includes a modem card connected with a computer such that the computer provides power to electronics in the modem card.
Figure 2A through Figure 2F illustrate a modem card suitable for use as modem cards constructed as disclosed in the context of Figure 1. Figure 2A is a perspective view of the modem card. The modem card includes an antenna body connected to a case.
Figure 2B is a cross-section of the mode card shown in Figure 2A taken along the line labeled B in Figure 2A.
Figure 2C is another perspective view of the modem card shown in Figure 2A.
Figure 2D is the perspective view of Figure 2C with the antenna body removed from the modem card to show the portion of the case under the antenna body.
Figure 2E illustrates the antenna body of Figure 2A moved from the first position illustrated in Figure 2A through Figure 2D to another position relative to the case as illustrated by the arrows labeled A in Figure 2E.
Figure 2F illustrates the modem card of Figure 2A through Figure 2E inserted into a port on a computer.
Figure 3A is a perspective view of a modem card where the case for the modem card is treated as transparent so the contents of the case are visible from outside of the case.
Figure 3B is a cross-section of the modem card shown in Figure 3A positioned in a port on a computer.
Figure 4 is a cross-section of another embodiment of a modem card.
Figure 5A is cross-section of a modem card where a corner of the case is a rounded corner and an inside corner on the antenna body is a rounded corner.
Figure 5B is a cross-section of a modem card where a corner of the case, an inside corner on the antenna body, and an outside corner of the antenna body are each a rounded corner.
Figure 5C is a cross-section of a modem card where a corner of the case, an inside corner on the antenna body, and an outside corner of the antenna body are each a beveled corner.
Figure 6A through Figure 6E illustrate a suitable construction for the primary antenna and the antenna body. Figure 6A is a topview of a flexible circuit that includes a metal trace that can serve as the primary antenna.
Figure 6B is a cross section of an antenna body that includes the flexible circuit shown in Figure 6A.
Figure 6C shows a conductor for use with the antenna body of Figure 6B.
Figure 6D illustrates the conductor of Figure 6C extending through an opening in the flexible circuit of Figure 6A.
Figure 6E is a cross-section of the flexible circuit shown in Figure 6D taken along the dashed line in Figure 6D.
Figure 7A through Figure 7G illustrate a hinge structure that is suitable for use with an antenna body constructed according to Figure 6A through Figure 6E. Figure 7A and Figure 7B illustrate an antenna body separated from the modem card. Figure 7A is a sideview of the antenna body.
Figure 7B is a sideview of the antenna body shown in Figure 7A taken looking in the direction of the arrow labeled B in Figure 7A.
Figure 7C is a sideview of a pin suitable for use with the antenna body illustrated in Figure 7A and figure 7B. The pin is configured to provide electrical communication between a circuit board in the modem card and the conductor of Figure 6C through Figure 6E.
Figure 7D is a sideview of the pin of Figure 7C taken looking in the direction of the arrow labeled D in Figure 7C.
Figure 7E is a sideview of a portion of the modem card where the antenna body is normally located but without the antenna body in place on the modem card. The illustrated portion of the modem card is suitable for use with the antenna body of Figure 7A trough Figure 7D. An antenna support extends from the modem card.
Figure 7F is a sideview of the antenna support shown in Figure 7E taken looking in the direction of the arrow labeled F in Figure 7E.
Figure 7G is a cross-section showing the components of Figure 6A through Figure 7F assembled so as to form a hinge that permits rotation and translation of the antenna body relative to a case for the modem card.

### DETAILED DESCRIPTION

A modem card provides wireless communication between a computer and a communications system. The modem card includes a case having a corner that connects two sides of the case. An antenna body is connected to the case such that the antenna body bends around the corner of the case. An antenna is positioned in the antenna body such that the antenna also bends around the corner of the case. Bending the antenna around the corner of the case can increase the distance between the antenna and another components in the modem card without substantially changing the dimensions of the modem card. For instance, bending the antenna around the corner of the case can increase the separation between the antenna and secondary antennas in the modem card and/or can increase the distance between the antenna and a circuit board in the modem card. Additionally, when the card is connected to a computer, bending the antenna around the corner can increase the distance between the antenna and the computer as well as provide different antenna polarizations to minimize effect of noise emitted by the laptop. The computer is a source of high radio frequency (RF) interference. As a result, bending the antenna around the corner of the case presents the opportunity to optimize the performance of the antenna.

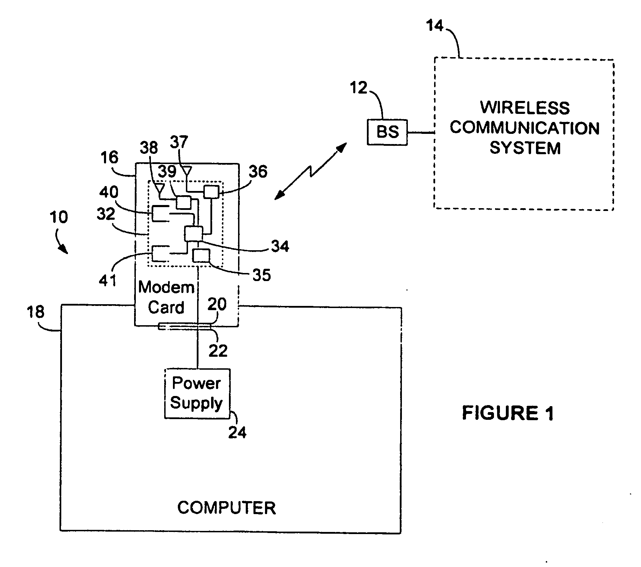

Figure 1 illustrates a computer system 10 in wireless communication with the base station 12 of a wireless communications system 14. The computer system 10 includes a modem card 16 in communication with a computer 18. The modem card 16 enables the computer 18 to wirelessly communicate with the wireless communications system 14 over a wireless air-link. Examples of suitable wireless communications systems 14 include, but are not limited to, code-division multiple access (CDMA) based networks. Suitable computers 18 include laptop computers and notebook computers but can also include other-computers 18 that employ modem-cards 16 to communicate with wireless communication systems such as game systems and office equipment. Suitable modem cards 16 includes, but are not limited to, Personal Computer Memory Card International Association (PCMCIA cards or PC cards) having wireless modem capabilities, Express Cards having wireless modem capabilities, Miniature Cards (Mini Cards) having wireless modem capabilities, and Express Mini Cards or Mini Express Cards having wireless modem capabilities.

The modem card 16 includes a connector 20 that permits the modem card 16 to be detachably connected to a connector 22 in the computer 18. For instance, PC cards typically employ a 68-contact, dual row pin and socket connector while an Express Card typically employs a 26-contact beam on blade connector. The computer 18 can include a port or a slot configured to receive or a portion of the modem card 16. In general, the computer 18 includes a port or a slot configured to receive a portion of the modem card 16 such that another portion of the modem card 16 extends outside of the computer 18. The connector 22 can be positioned in the port or slot such that the connector 20 on the modem card 16 is connected with the connector 22 on the computer 18.

The computer 18 includes a power supply 24 that provides power to electronics 32 in the modem card 16 through the connector 20 For instance, modem cards 16 typically operate at about 5 V or 3.3 V. In some instances, the power supply 24 provides power to the modem card 16 at about 5 V or at about 3.3 V.

The electronics 32 include a processor 34 in communication with a voltmeter 35. The processor 34 can employ the voltmeter to monitor, measure, and/or determine the voltage of the power being supplied to the modem card 16. A suitable processor 34 includes, but is not limited to, a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions attributed to the electronics 32 and/or the processor 34. A general purpose processor may be a microprocessor. In the alternative, the processor may be any conventional processor, controller, microcontroller, or state machine. A processor 34 may also be implemented as a combination of computing devices, e.g., a combination of a DSP and a microprocessor, a plurality of microprocessors, one or more microprocessors in conjunction with a DSP core, or any other such configuration.

The electronics 32 are in communication with a primary antenna 37. For instance, the electronics 32 include a transceiver 36 in communication with the primary antenna 37. The processor 34 is in communication with the transceiver 36. The processor 34 can employ the transceiver 36 to wirelessly transmit signals to the communications system 14 and to wirelessly receive signals from the communications system 14. As an alternative to the transceiver 36, the electronics 32 can be in communication with a receiver and a transmitter. Alternately, the transceiver 36 can be a transmitter and the electronics can employ the antenna to transmit signals to the communications system 14. Alternately, the transceiver 36 can be a receiver and the electronics can employ the antenna to receive signals from the communications system 14.

The primary antenna 37 can be configured to resonate at radiofrequencies (RF) and can accordingly be an RF antenna for transmitting and/or receiving RF signals. Suitable primary antennas 37 includes, but are not limited to, monopole or dipole antennas.

The electronics 32 can optionally include one or more secondary antenna 38. The electronics can employ the secondary antenna 38 to communicate with the illustrated_communications_system or to communicate with other communication systems that are not illustrated. Examples of secondary antenna 38 include, but are not limited to, diversity antennas, global positioning system (GPS) antennas, Bluetooth® antennas, and WI-FI® antennas. Figure 1 illustrates the modem card including a secondary antenna 38 in communication with a secondary transceiver 39. The secondary transceiver 39 is in communication with a secondary antenna 38. The processor 34 is in communication with the secondary transceiver 39. In some instances, the processor 34 employs the secondary transceiver 39 and the secondary antenna 38 to wirelessly transmit signals and/or to wirelessly receive signals from the communications system 14 or from another communications system. As an alternative to the secondary transceiver 39, the processor 32 and the secondary antenna 38 can be in communication with a receiver and a transmitter. Alternately, the secondary transceiver 39 can be a transmitter and the electronics can employ the transmitter and secondary antenna 38 to transmit signals. Alternately, the secondary transceiver 36 can be a receiver and the electronics can employ the receiver and the secondary antenna 38 to receive signals.

The electronics 32 include a memory 40 in communication with the processor 34. The electronics 32 can store data for communicating with the communications system 14 in the memory 40. For instance, a maximum transmit power can be stored in the memory 40. The memory 40 can be any memory device or combination of memory devices suitable for read/write operations.

In some instances, the electronics 32 include a computer-readable medium 41 in communication with the processor 34. The computer-readable medium 41 can have a set of instructions to be executed by the processor 34. The processor 34 can execute the instructions such that the electronics 32 perform desired functions such as executing a request for packet data service originated by the user. Although the computer-readable medium 41 is shown as being different from the memory, the computer-readable medium 41 can be the same as the memory 40. Suitable computer-readable media 38 include, but are not limited to, optical discs such as CDs, magnetic storage diskettes, Zip disks, magnetic tapes, RAMs, and ROMs.

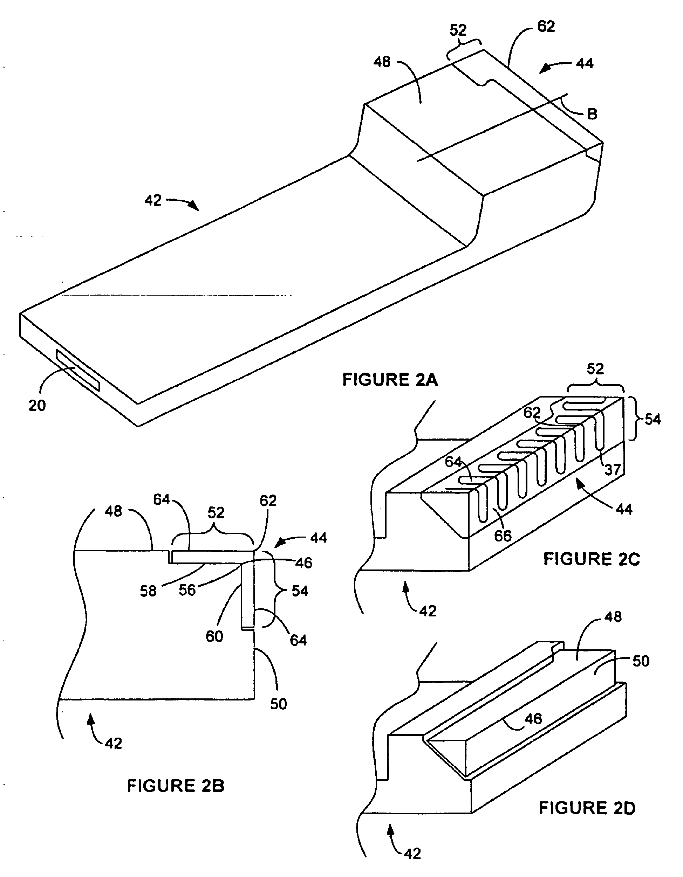

Figure 2A through Figure 2C illustrate a modem card suitable for use as a modem card constructed as disclosed in the context of Figure 1. Figure 2A is a perspective view of the modem card. The modem card includes an antenna body 44 connected to a case 42. Figure 2B is a cross-section of the modem card shown in Figure 2A taken along the line labeled B in Figure 2A. Figure 2C is another perspective view of the modem card. Figure 2D is the perspective view shown in Figure 2C with the antenna body 44 removed from the modem card to show the portion of the case 42 under the antenna body 44.

The case 42 is configured to hold the electronics. A corner 46 connects a first side of the case 42 with a second side of the case 42. For instance, Figure 2D shows the corner 46 connecting a topside 48 of the case 42 with a lateral side 50 of the case 42.

The antenna body 44 includes a first part 52 and a second part 54. The antenna body 44 includes at least one corner that connects a surface on the first part 52 to a surface on the second part 54. For instance, Figure 2A through Figure 2D illustrate an antenna body 44 that includes an inside corner 56 than connects an inner surface 58 on the first part 52 to an inner surface 60 on the second part 54. Additionally, the antenna body 44 includes an outside corner 62 than connects an outer surface 64 on the first part 52 to an outer surface 66 on the second part 54. The antenna body 44 bends around the corner 46 of the case 42. For instance, the first part 52 of the case 42 is positioned adjacent to the topside 48 of the case 42 while the second part 54 is positioned adjacent to the lateral side 50 of the case 42.

Figure 2C treats the antenna body 44 as transparent. Figure 2C shows a primary antenna 37 positioned in the antenna body 44. A first portion of the primary antenna 37 is positioned in the first part 52 of the antenna body 44 and a second portion of the primary antenna 37 is positioned in the second part 54 of the antenna body 44. Accordingly, the primary antenna 37 bends around the corner 46 of the case 42. For instance, the first portion of the primary antenna 37 is positioned over the topside 48 of the case 42 and the second portion of the primary antenna 37 is positioned over a lateral side 50 of the case 42.

Figure 2C shows the primary antenna 37 passing between the first portion of the primary antenna 37 and the second portion of the antenna multiple times. However, the arrangement of the primary antenna 37 in the antenna body 44 shown in Figure 2C is for illustrative purposes only and a variety of other arrangements for the primary antenna 37 in the antenna body 44 are possible. Accordingly, the primary antenna 37 can pass from the first portion of the antenna body 44 to the second portion of the antenna body 44 a single time.

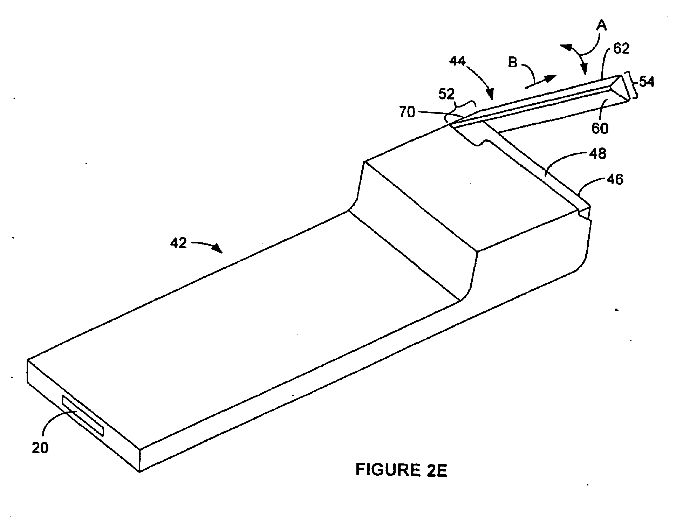

The antenna body 44 can optionally be configured to be movable relative to the case 42. Figure 2A through Figurer 2D show the antenna body 44 in a first position. The antenna body 44 can be moved to one or more other positions. For instance, the antenna body 44 can be attached to the case 42 at a hinge. The antenna body 44 can be rotated around the hinge 70 as shown in Figure 2E. Figure 2E illustrates the antenna body 44 of Figure 2A moved from the first position to another position relative to the case 42. The antenna body 44 can be moved to positions in addition to the position shown in Figure 2E as illustrated by the arrows labeled A. In addition to the rotation around the hinge or as an alternative to the rotation around the hinge, the antenna body can be translated relative to the case. For instance, the antenna body can be translated away from the case as illustrated by the arrow labeled B in Figure 2E. This translation of the antenna body permits the distance between the primary antenna and the case to be further increased.

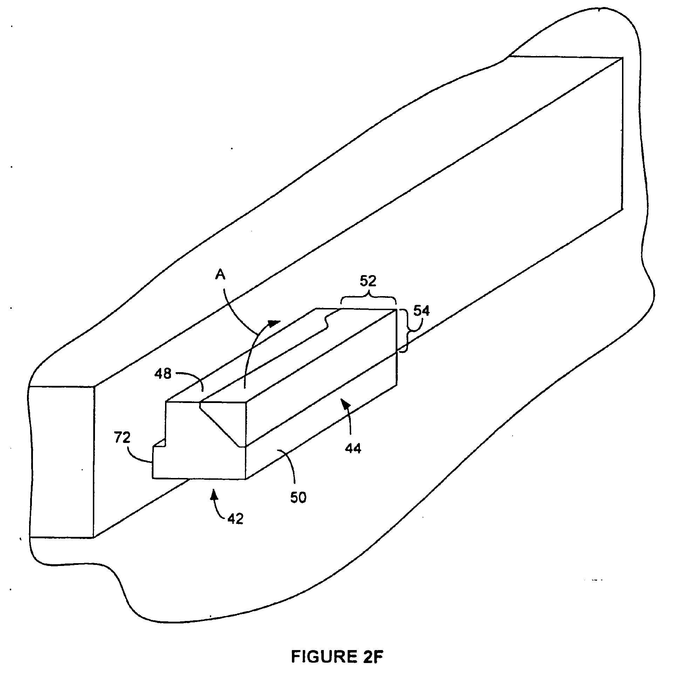

Figure 2F illustrates the modem card of Figure 2A through Figure 2E inserted into a port 72 on a computer such that the connector on the modem card (not shown) is connected with a connector (not shown) in the port. A portion of the mode card is positioned outside of the computer. Additionally, the antenna body 44 is positioned outside of the computer. The antenna body 44 can be moved relative to the case 42 of the modem card as illustrated by the arrow labeled A in Figure 2F. The movement of the antenna body 44 relative to the case 42 allows a user of the modem card to optimize the position of the primary antenna 37 relative to incoming signals.

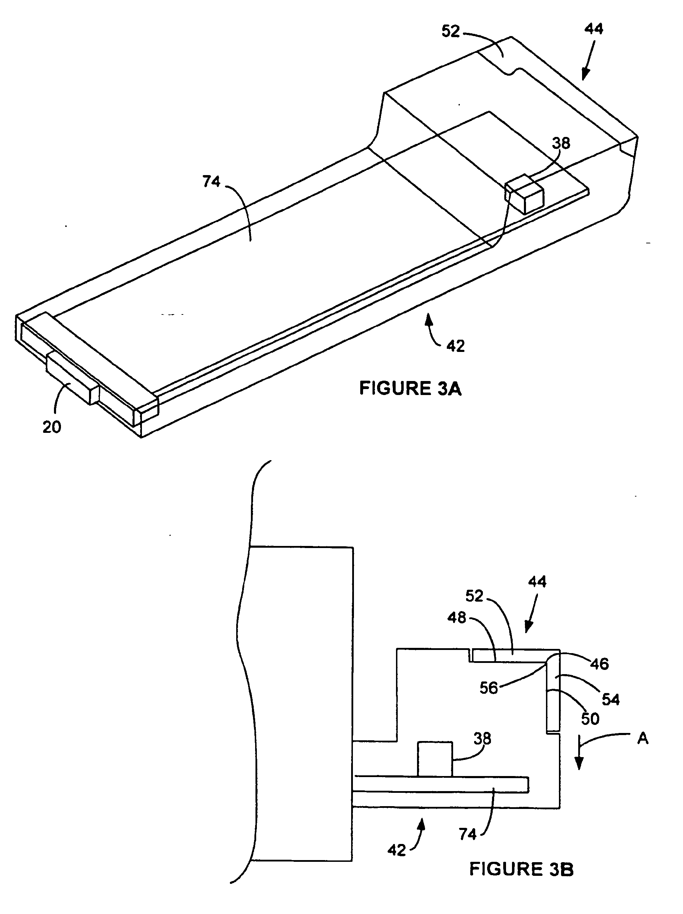

When the primary antenna 37 is in the first position, the distance between the primary antenna 37, the other electronics in the modem card, and the computer can be optimized. For instance, Figure 3A illustrates a typical arrangement of the electronics in a modem card. Figure 3A is a perspective view of the modem card where the case 42 for the modem card is treated as transparent so the contents of the case 42 are visible from outside of the case 42. The case 42 holds the electronics disclosed in the context of Figure 1. All or a portion of the electronics are positioned on a circuit board 74 such as a printed circuit board (PCB) or a printed wiring board (PWB). Suitable circuit boards include metal configured to serve as the ground plane for the primary antenna. In one example, the circuit board is constructed of several different layers of material with at least one of the layers being a copper layer that serves as the ground plane for the primary antenna. The details of the circuitry for the electronics on the circuit board 74 are not shown. The connector 20 and a secondary antenna 38 are positioned on the circuit board 74.

Figure 3B is a cross-section of the modem card shown in Figure 3A positioned in a port on a computer. At least a portion of the secondary antenna 38 is located outside of the computer. Figure 3B shows the position of the antenna body 44 relative to the secondary antenna 38 and relative to the computer. Bending the antenna body 44 around the corner 46 of the case 42 allows optimization of the distance between the primary antenna 37 and the components of the computer system. For instance, the dimensions of the first part 52 of the antenna body 44 and the second part 54 of the antenna body 44 can be altered to improve the displacement between the primary antenna 37 and different features of the computer system. For instances, increasing the width of the second part 54 of the antenna body 44 as shown by the arrow labeled A accompanied by decreasing the width of the first part 52 of the antenna body 44 moves the primary antenna 37 further from the computer without requiring a decrease in the length of the primary antenna 37. However, the degree of the increase may be limited by the proximity of the secondary antenna 38 and/or ground planes in the circuit board 74. For instance, the performance of the primary antenna 37 may decrease as the primary antenna 37 moves closer to the circuit board 74 and/or the secondary antenna 38. Accordingly, the dimensions of the antenna body 44 are selected to achieve the desired separations between the primary antenna 37 and the components of the computer system.

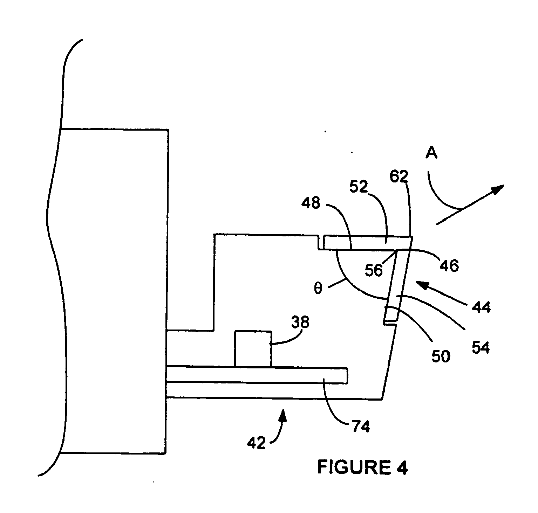

The shape of the modem card can be altered to further enhance the distance between the primary antenna 37 and the components of the computer system. For instance, the length of the first side of the case 42 and the length of the second side of the case 42 can be increased. For instance, the corner 46 of the case 42 can be moved in the direction indicated by the arrow labeled A in Figure 4. As shown in Figure 4, increasing the length of the first side and the second side can result in the antenna body 44 being the portion of the mode card that is furthest from the computer and can accordingly increase_the distance_between the antenna body 44 and the components of the computer system. Increasing the length of the first side and the second side can be achieved without increasing the dimensions of the other sides of the case 42 in order to minimize the increase in the size of the modem card that results from these increases. As a result, the outside of the first side of the case 42 can be at less than a ninety degree angle relative to the outside of the second side. For instance, Figure 4 illustrates the outside of the first side positioned at an angle ⊏ relative to the outside of the second side. The angle ⊏ can be less than 90°. For instance, the angle ⊏ can be less than or equal to 89.8° or 89.5°. As is evident from Figure 4, the first part 52 of the antenna body 44 can be at less than ninety degree relative to the second part 54 of the antenna body 44. For instance, the inside of the first part 52 can also be at an angle relative to the second part 54.

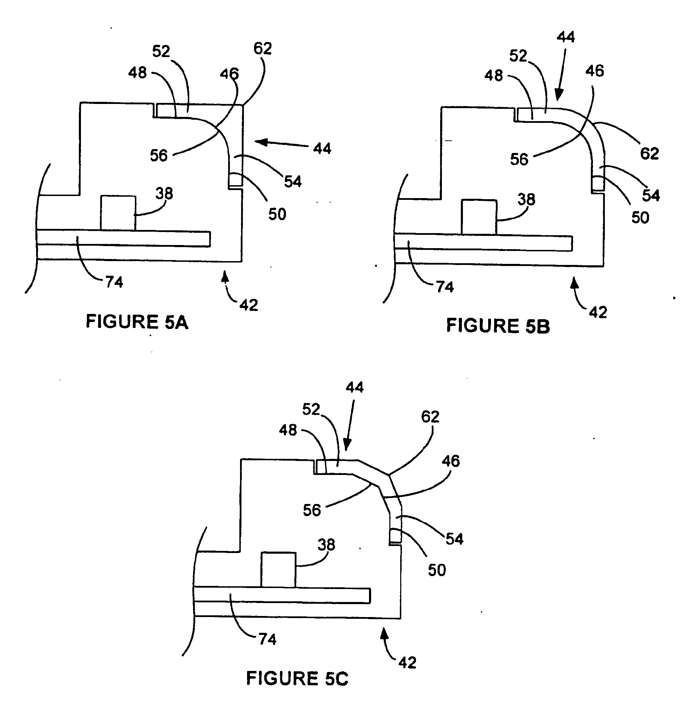

The corner 46 of the case can be a squared or rounded. For instance, Figure 2B illustrates the corner 46 of the case 42 as a squared. In contrast, Figure 5A illustrates the corner 46 of the case 42 as rounded. The inside corner 56 of the antenna body 44 can have a shape that is complementary to the shape of the corner 46 of the case 42. For instance, the inside corner 56 of the antenna body 44 can have a rounded shape matched to the shape of the corner 46 of the case 42 as shown in Figure 5A. Additionally or alternately, the outside corner 62 of the antenna body 44 can be rounded as illustrated in Figure 5B. The corner 46 of the case 42 and/or the inside corner 56 of the antenna body 44, and/or the outside corner 62 of the antenna body can be a beveled corner. For instance, the corner 46 of the case 42 and/or the inside corner 56 of the antenna body 44, and/or the outside corner 62 of the antenna body can include one or more surfaces. As an example, Figure 5C shows the corner 46 of the case 42, the inside corner 56 of the antenna body 44 and the outside corner 62 of the antenna body 44 each having a plurality of surfaces.

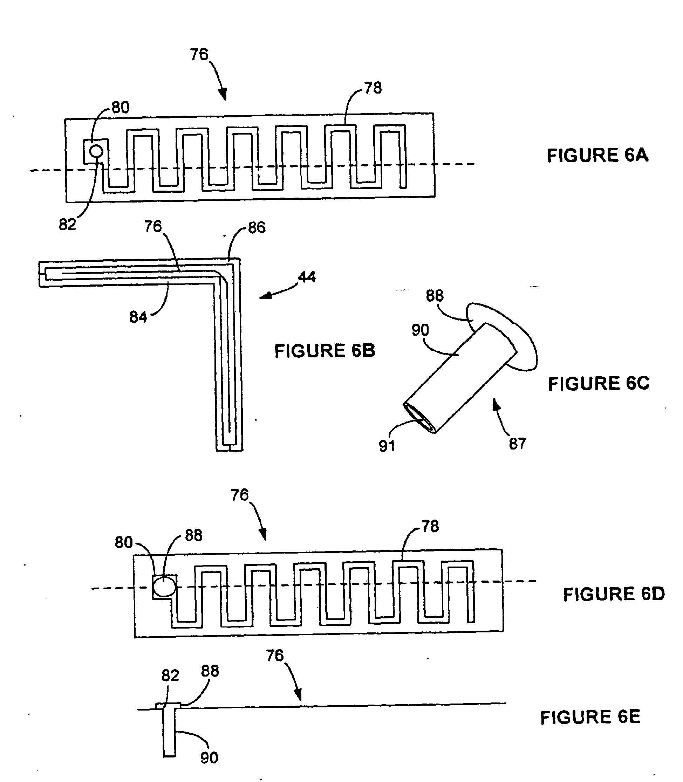

Figure 6A through Figure 6E illustrate a suitable construction for the primary antenna and the antenna body. The primary antenna can be included on a flexible circuit. For instance, the primary antenna can by a metal trace on a flexible circuit board (FCB), a flexible printed circuit (FPC), or a flexible printed circuit board (FPCB). Figure 6A is a topview of a flexible circuit 76 that includes a metal trace 78 that can serve as the primary antenna. The metal trace 78 ends at a pad 80. An opening 82 extends through flexible circuit 76 such that the pad 80 is positioned adjacent to the opening 82 and/or surrounds the opening 82. The flexible circuit 76 can be bent along the dashed line shown in Figure 6A. In one example, the metal trace 78 is a copper trace and the flexible board is Mylar.

Figure 6B is a cross section of the antenna body 44 including the flexible circuit 76 shown in Figure 6A. The flexible circuit 76 is positioned in an interior of the antenna body 44 and bends around a corner on an interior of the antenna body 44. In some instances, the antenna body 44 is constructed of multiple parts. For instance, the antenna body 44 can be constructed of an interior member 84 and an exterior member 86.

Figure 6C shows a conductor 87 for use with the antenna body 44. The conductor 87 includes a flange 88 connected to a body 90. An opening 91 extends into the body 90 of the conductor 87. The outside of the body 90 is configured to extend through the opening 82 in the flexible circuit 76 as shown in figure-6D and Figure 6E. Figure 6D is a topview of the flexible circuit 76 shown in Figure 6A with the body 90 of the conductor 87 extending through the opening 82. Figure 6E is a cross-section of the flexible circuit 76 shown in Figure 6D taken along the dashed line in Figure 6D. The metal trace is not shown in Figure 6E. The body 90 of the conductor 87 is positioned in the opening 82 such that the flange 88 contacts the pad 80 on the flexible circuit 76. The flange 88 can be welded to the pad 80 to achieve and/or retain electrical communication between the pad 80 and the flange 88. As will become evident below, the conductor 87 can be employed to provide electrical communication between the primary antenna and the electronics in the modem card. Accordingly, the conductor 87 can be constructed of electrically conducting materials.

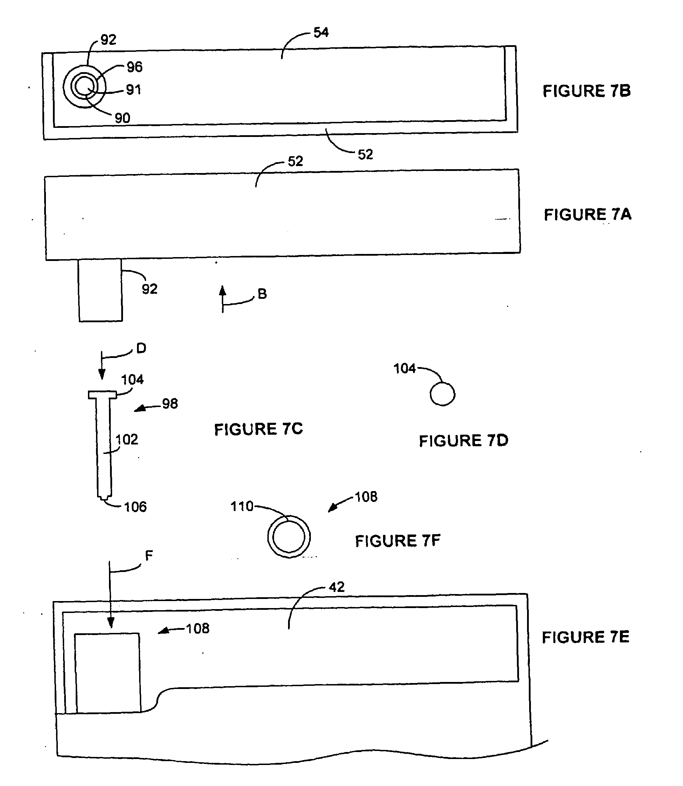

Figure 7A through Figure 7G illustrate a hinge structure that is suitable for use with an antenna body 44 constructed according to Figure 6A through Figure 6D. The hinge illustrated in Figure 7A through Figure 7G is suitable for achieving rotation of the antenna body 44 relative to the case 42 in addition to translation of the antenna body 44 relative to the case 42.

Figure 7A and Figure 7B illustrate the antenna body 44 separated from the modem card. Figure 7A is a sideview of the antenna body 44. For instance. Figure 7A is a sideview of the first part 52 of the antenna body 44 with the second part 54 of the antenna body 44 extending into the page. Figure 7B is a sideview of the antenna body 44 shown in Figure 7A taken looking in the direction of the arrow labeled B in Figure 7A. Accordingly, the second part 54 of the antenna body 44 is visible in Figure 7B. A first antenna support 92 extends from the antenna body 44. The second antenna support is immobilized relative to the antenna body 44. An opening 96 extends through the first antenna support 92. The opening 96 is configured to receive at least a portion of the body 90 of the conductor 87 of Figure 6C through Figure 6E. As will become evident below, the opening 96 in the first antenna support 92 can be aligned with an opening in the antenna body 44. As will become evident below, the body 90 of the conductor 87 of Figure 6D and Figure 6E can extend through the opening in the antenna body 44 into the opening 96 in the first antenna support 92. As a result, the body 90 of the conductor can be seen in the opening 96 in the first antenna support 92.

Figure 7C is a sideview of a pin 98 configured to provide electrical communication between a circuit board in the modem card and the conductor 87 of Figure 6C through Figure 6E. Figure 7D is a sideview of the pin 98 taken looking in the direction of the arrow labeled D in Figure 7C. The pin 98 includes a contact region 104 and a second contact region 106 connected to a common region 102. As will become evident below, the pin 98 is configured to extend into the opening 96 in the first antenna support 92 and to be received in the opening 91 in the body 90 of the conductor with the contact region 104 in contact with the interior sides of the body 90 of the conductor 87. For instance, the contact region 104 of the pin 98 is configured to be received in the opening 91 in the body 90 of the conductor evident in Figure 7B. Because the pin 98 is employed to provide electrical conduction between components in the modem card, the pin 98 is preferably constructed of electrically conducting materials.

Figure 7E is a sideview of the portion of the modem card where the antenna body 44 is normally located but without the antenna body 44 in place on the modem card. A second antenna support extends from the case 42. The second antenna support is immobilized relative to the case 42. Figure 7F is a sideview of the second antenna support shown in Figure 7E taken looking in the direction of the arrow labeled F in Figure 7E. An opening 110 extends into the second antenna support. The opening in the second antenna support is configured to receive at least a portion of the first antenna support 92.

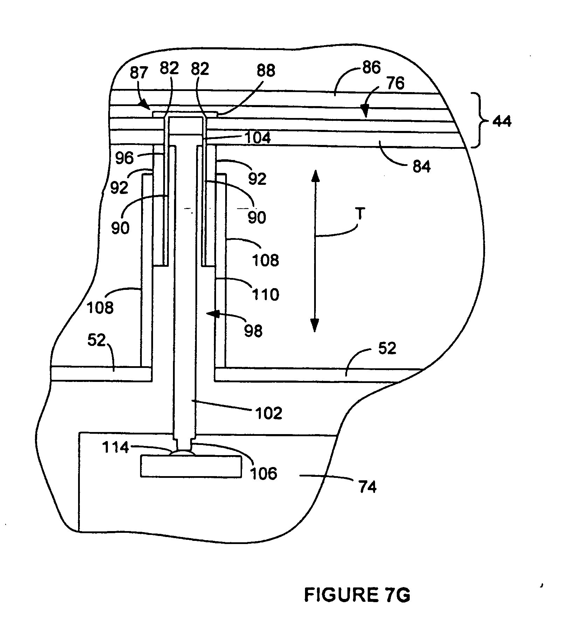

Figure 7G is a cross-section showing the components of Figure 6A through Figure 7F assembled so as to form a hinge that permits rotation of the antenna relative to the case 42 combined with translation of the antenna relative to the case 42. The flexible circuit 76 is positioned in the interior of the antenna body 44 with the conductor 87 extending through the opening 82 in the flexible circuit 76. The conductor 87 extends from the interior of the antenna body 44 into the opening 96 in the first antenna support 92. The pin 98 is received in the interior of the conductor 87 with the contact region 104 contacting the interior sides of the conductor 87. The pin 98 extends through the opening 110 in the second antenna support into contact with a contact on a circuit board positioned in the case 42 of the modem card. For instance, the second contact region 106 on the pin 98 can be in contact with a spring contact 114 on the circuit board. The contact 114 on the circuit board can be in electrical communication with electronics on the circuit board. Accordingly, electrical communication between the electronics on the circuit board and the primary antenna can travel through the contact on the circuit board, the pin 98, and the conductor 87.

As is also evident from Figure 7G, the first antenna support 92 is received in the opening 110 in the second antenna support. The first antenna support 92 can be rotated in the second antenna support permitting the antenna body to be rotated relative to the case. Additionally or alternately, the first antenna support 92 can be moved up and down in the second antenna support as indicated by the arrow labeled T. The movement of the first antenna support 92 up and down in the second antenna support provides translation of the antenna body relative to the case. A number of techniques can be employed to prevent the first antenna support from being pulled out of the second antenna support including tapering of the antenna supports and/or the use of flanges. For instance, the first antenna support and the second antenna support can be provided with a telescoping structure. Although the hinge is shown with only a first antenna support and a second antenna support, additional translation distance can be achieved with the use of additional antenna supports between the first antenna support and the second antenna support. The antenna supports can be provided with a telescoping arrangement.

The translation and rotation of the antenna body 4.4 relative to the case 42 does not disrupt the electrical communication between the primary antenna and the electronics on the circuit board. For instance, the pin can be immobilized relative to the contact 114. As a result, rotation of the antenna body cause rotation of the conductor 87 around the pin 98 but does not break the electrical contact between the contact region 104 on the pin 98 and the interior of the conductor 87. Additionally, limited translation of the conductor 87 toward or away from the case 42 does not break the electrical contact between the contact region 104 of the pin 98 and the interior of the conductor 87. As a result, the translation and rotation of the antenna body 44 relative to the case 42 does not break the electrical contact between the contact region 104 on the pin 98 and the interior of the conductor 87.

The details of the attachment between the first antenna support 92 and the antenna body 44 are not illustrated, however, traditional attachment techniques can be employed and/or the first antenna support 92 can be integral with the antenna body 44. Additionally, the details of the attachment between the second antenna support and the case 42 are not illustrated, however, traditional attachment techniques can be employed and/or the first antenna support 92 can be integral with the case 42.

Although the antenna body is disclosed above as being movable relative to the case, the antenna body can be incorporated into the case such that the antenna body is immobilized relative to the case.

Other embodiments and modifications of this invention will occur readily to those of ordinary skill in the art in view of these teachings. The above description is illustrative and not restrictive. This invention is to be limited only by the following claims, which include all such embodiments and modifications when viewed in conjunction with the above specification and accompanying drawings. The scope of the invention should, therefore, be determined not with reference to the above description, but instead should be determined with reference to the appended claims along with their full scope of equivalents.

## Claims

1. A modem card, comprising:
a case (42) holding electronics, the case having a front face and a top face which form an outside corner extending along a length of the top face of the case, wherein the outside corner has a recessed area for accepting an antenna body (44);
the antenna body (44) connected to the outside corner of the case, and positioned to sit within the recessed area, wherein the antenna body bends around the outside corner of the case such that a first portion of the antenna body is flush with the front face and a second portion of the antenna body is flush with the top face, and
an antenna in electrical communication with the electronics, the antenna being positioned within the antenna body such that the antenna bends around the outside corner of the case.

2. The card of claim 1, wherein the antenna body has a cross-section with an L shape.

3. The card of claim 1, wherein the antenna comprises a conductor which zig zags within the first portion and the second portion.

4. The card of claim 1, wherein the front face of the case is at an angle θ relative to the top face of the case, wherein the angle θ is 90°.

5. The card of claim 4, wherein the angle e is less than 90°.

6. The card of claim 1, wherein the antenna body is movable in a direction relative to the outside corner of the case.

7. The card of claim 1, wherein a hinge connects the antenna body to the case such that the antenna body can be rotated away from the case.

8. The card of claim 3, wherein the conductor is a wire.

9. The card of claim 3, wherein the conductor is a metal trace on a flexible circuit.

10. The card of claim 1, wherein the outside corner of the case is a rounded corner.

11. The card of claim 1, further comprising:
a connector configured to be coupled with a computer at a first end of the modem card;
wherein the antenna body is located at an opposite end of the modem card such the when the connector is coupled with the computer the antenna body is the portion of the modem card that is furthest from the computer.

12. A computer system, comprising:
the modem card of claim 1 positioned in a port of a computer, the modem card including
a connector for connecting the modem card to the port of the computer, the connector located at a first end of the modem card;

13. The system of claim 12, wherein a portion of the modem card extends from the computer such that the antenna body is located at a second end of the modem card that is farthest from the first end.

14. The system of claim 12, wherein the antenna body has a cross-section with an L shape.

15. The system of claim 12, wherein:
the corner of the case connects a first side of the case to a second side of the case, wherein the first side of the case is at an angle θ relative to the second side of the case, the angle θ being less than 90°,
the antenna body includes a first part joined with and a second part and a surface of the first part meets a surface of the second part at a corner of the antenna body,
and the first part of the antenna body is adjacent to the first side of the case, and the second part of the antenna body is adjacent to the second side of the case.

## Patentansprüche

1. Eine Modemkarte, aufweisend:
ein Elektronik aufnehmendes Gehäuse (42), wobei das Gehäuse eine Stirnseite und eine Oberseite aufweist, die eine Außenecke ausbilden, die sich entlang einer Länge der Oberseite des Gehäuses erstreckt, wobei die Außenecke einen Aussparungsbereich zum Aufnehmen eines Antennenkörpers (44) aufweist,
den Antennenkörper (44), der mit der Außenecke des Gehäuses verbunden ist und derart positioniert ist, dass er innerhalb des Aussparungsbereichs sitzt, wobei der Antennenkörper um die Außenecke des Gehäuses herum abgewinkelt ist, so dass ein erster Abschnitt des Antennenkörpers mit der Stirnseite fluchtet und ein zweiter Abschnitt des Antennenkörpers mit der Oberseite fluchtet, und
eine Antenne in elektrischer Verbindung mit der Elektronik, wobei die Antenne innerhalb des Antennenkörpers positioniert ist, so dass die Antenne um die Außenecke des Gehäuses herum abgewinkelt ist.

2. Die Karte gemäß Anspruch 1, wobei der Antennenkörper einen Querschnitt mit einer L-Form hat.

3. Die Karte gemäß Anspruch 1, wobei die Antenne einen Leiter mit Zickzacklinien innerhalb des ersten Abschnitts und des zweiten Abschnitts aufweist.

4. Die Karte gemäß Anspruch 1, wobei die Stirnseite des Gehäuses bezüglich der Oberseite des Gehäuses in einem Winkel θ vorgesehen ist, wobei der Winkel θ 90° beträgt.

5. Die Karte gemäß Anspruch 4, wobei der Winkel θ kleiner als 90° ist.

6. Die Karte gemäß Anspruch 1, wobei der Antennenkörper in einer Richtung bezüglich der Außenecke des Gehäuses bewegbar ist.

7. Die Karte gemäß Anspruch 1, wobei ein Gelenk den Antennenkörper mit dem Gehäuse verbindet, so dass der Antennenkörper von dem Gehäuse weggedreht werden kann.

8. Die Karte gemäß Anspruch 3, wobei der Leiter ein Draht ist.

9. Die Karte gemäß Anspruch 3, wobei der Leiter eine Metallspur auf einem flexiblen Schaltkreis ist.

10. Die Karte gemäß Anspruch 1, wobei die Außenecke des Gehäuses eine abgerundete Ecke ist.

11. Die Karte gemäß Anspruch 1, ferner aufweisend:
einen Anschlussstecker, der eingerichtet ist, um an einem ersten Ende der Modemkarte mit einem Computer verbunden zu sein,
wobei der Antennenkörper an einem entgegengesetzten Ende der Modemkarte angeordnet ist, so dass, wenn der Anschlussstecker mit dem Computer verbunden ist, der Antennenkörper der Abschnitt der Modemkarte ist, der am weitesten von dem Computer entfernt ist.

12. Ein Computersystem, aufweisend:
die Modemkarte gemäß Anspruch 1, die in einem Anschluss eines Computers angeordnet ist, wobei die Modemkarte aufweist:
einen Anschlussstecker zum Anschließen der Modemkarte an den Anschluss des Computers, wobei der Anschlussstecker an einem ersten Ende der Modemkarte angeordnet ist.

13. Das System gemäß Anspruch 12, wobei sich ein Abschnitt der Modemkarte von dem Computer aus erstreckt, so dass der Antennenkörper an einem zweiten Ende der Modemkarte angeordnet ist, das von dem ersten Ende am weitesten entfernt ist.

14. Das System gemäß Anspruch 12, wobei der Antennenkörper einen Querschnitt mit einer L-Form hat.

15. Das System gemäß Anspruch 12, wobei:
die Ecke des Gehäuses eine erste Seite des Gehäuses mit einer zweiten Seite des Gehäuses verbindet, wobei die erste Seite des Gehäuses bezüglich der zweiten Seite des Gehäuses in einem Winkel θ vorgesehen ist, wobei der Winkel θ kleiner als 90° ist,
der Antennenkörper einen ersten Teil aufweist, der mit einem zweiten Teil verbunden ist, und eine Fläche des ersten Teils an einer Ecke des Antennenkörpers mit einer Fläche des zweiten Teils zusammentrifft,
und der erste Teil des Antennenkörpers benachbart zu der ersten Seite des Gehäuses ist und der zweite Teil des Antennenkörpers benachbart zu der zweiten Seite des Gehäuses ist.

## Revendications

1. Carte modem comprenant :
un boîtier (42) qui contient des circuits électroniques, le boîtier présentant une face avant et une face supérieure qui forment un coin extérieur qui s'étend sur une longueur de la face supérieure du boîtier, dans laquelle le coin extérieur présente une zone en retrait destinée à recevoir un corps d'antenne (44) ;
le corps d'antenne (44) est connecté au coin extérieur du boîtier et positionné de façon à se situer dans la zone en retrait, dans laquelle le corps d'antenne forme un coude autour du coin extérieur du boîtier de telle sorte qu'une première partie du corps d'antenne affleure la face avant et qu'une seconde partie du corps d'antenne affleure la face supérieure ; et
une antenne en communication électrique avec les circuits électroniques, l'antenne étant positionnée à l'intérieur du corps d'antenne de telle sorte que l'antenne forme un coude autour du coin extérieur du boîtier.

2. Carte selon la revendication 1, dans laquelle le corps d'antenne présente une section transversale en forme de L.

3. Carte selon la revendication 1, dans laquelle l'antenne comprend un conducteur qui zigzague à l'intérieur de la première partie et de la seconde partie.

4. Carte selon la revendication 1, dans laquelle la face avant du boîtier forme un angle Θ par rapport à la face supérieure du boîtier, dans laquelle l'angle Θ est égal à 90°.

5. Carte selon la revendication 4, dans laquelle l'angle Θ est inférieur à 90°.

6. Carte selon la revendication 1, dans laquelle le corps d'antenne peut être déplacé dans une direction par rapport au coin extérieur du boîtier.

7. Carte selon la revendication 1, dans laquelle une charnière connecte le corps d'antenne au boîtier de telle sorte que le corps d'antenne puisse pivoter en s'éloignant du boîtier.

8. Carte selon la revendication 3, dans laquelle le conducteur est un fil.

9. Carte selon la revendication 3, dans laquelle le conducteur est une piste métallique située sur un circuit souple.

10. Carte selon la revendication 1, dans laquelle le coin extérieur du boîtier est un coin arrondi.

11. Carte selon la revendication 1, comprenant en outre :
un connecteur configuré de façon à être couplé à un ordinateur au niveau d'une première extrémité de la carte modem ;
dans laquelle le corps d'antenne se situe au niveau d'une extrémité opposée de la carte modem de telle sorte que lorsque le connecteur est couplé à l'ordinateur, le corps d'antenne soit la partie de la carte modem qui est la plus éloignée de l'ordinateur.

12. Système d'ordinateur comprenant :
la carte modem selon la revendication 1, positionnée dans un port d'ordinateur, la carte modem comprenant :
un connecteur destiné à connecter la carte modem au port de l'ordinateur, le connecteur étant situé au niveau d'une première extrémité de la carte modem.

13. Système selon la revendication 12, dans lequel une partie de la carte modem s'étend à partir de l'ordinateur de telle sorte que le corps d'antenne se situe au niveau d'une seconde extrémité de la carte modem qui est la plus éloignée de la première extrémité.

14. Système selon la revendication 12, dans lequel le corps d'antenne présente une section transversale en forme de L.

15. Système selon la revendication 12, dans lequel :
le coin du boîtier connecte un premier côté du boîtier à un second côté du boîtier, dans lequel le premier côté du boîtier forme un angle Θ par rapport au second côté du boîtier, l'angle Θ étant inférieur à 90° ;
le corps d'antenne comprend une première partie jointe à une seconde partie et une surface de la première partie rencontre une surface de la seconde partie au niveau d'un coin du corps d'antenne ;
et la première partie du corps d'antenne est adjacente au premier côté du boîtier, et la seconde partie du corps d'antenne est adjacente au second côté du boîtier.
